# EUROPEAN PATENT SPECIFICATION

(11) **EP 2 551 104 B1**
(45) Date of publication and mention of the grant of the patent: **28.06.2017**
(21) Application number: 11759326.9
(22) Date of filing: 18.03.2011
(51) Int. Cl.: B32B 23/02, B32B 27/20, B65D 65/40, C08K 5/5415, C08K 7/00, C08L 1/00, C08L 29/04

(54) **GAS BARRIER LAMINATE AND PACKAGING MATERIAL**
GASBARRIERENLAMINAT UND VERPACKUNGSMATERIAL
STRATIFIÉ DE BARRIÈRE CONTRE LES GAZ ET MATÉRIAU D'EMBALLAGE

(30) Priority: 25.03.2010 JP 2010069573
(43) Date of publication of application: 30.01.2013
(73) Proprietor: Toppan Printing Co., Ltd., Taito-ku, Tokyo 110-0016 (JP)
(72) Inventor: IMAI Kazuko, Tokyo 110-0016 (JP); OOMORI Yumiko, Tokyo 110-0016 (JP)
(74) Representative: Andrews, Timothy Stephen
(86) International application number: PCT/JP2011/056541
(87) International publication number: WO 2011/118520

(56) References cited:
- WO-A1-2009/084566
- CA-A2- 1 045 126
- JP-A- 2001 334 600
- JP-A- 2002 348 522
- JP-A- 2003 103 692
- JP-A- 2003 121 821
- JP-A- 2003 201 695
- JP-A- 2006 035 737
- JP-A- 2008 001 728
- JP-A- 2009 057 552
- JP-A- 2009 263 850

## Description

### Technical Field

The present invention relates to a gas barrier laminate effectively utilizing a cellulosic material as a natural resource, and relates to a laminate that has excellent flexibility and shows high gas barrier properties even in a high humidity environment by making a water-soluble polymer having excellent affinity with a cellulose composite in a layer made of cellulose fibers.

### Background Art

In the field of packaging materials, including food or drugs, the gas barrier properties of cutting off gas, such as oxygen or water vapor, which permeates a packaging material, are required in order to protect the contents.

In the related art, as gas barrier materials, aluminum and polyvinylidene chloride, which are little influenced by temperature or humidity, have been used. However, when these materials are incinerated, a problem where an exhaust port or the inside of a furnace may be clogged with incinerated residue and the incineration efficiency may decline occurs in aluminum, and a problem where dioxin may be generated occurs in polyvinylidene chloride. Therefore, alternative materials with little environmental load are required. For example, even in materials made from the same fossil resources as in PTL 1, partial alternatives to polyvinyl alcohol or an ethylenevinyl alcohol copolymer that contain neither aluminum nor chlorine have been proposed. However, alternative biomass materials to petroleum-originated materials are expected in future.

Thus, a cellulosic material is gaining attention as a new gas barrier material. Since cellulose, which accounts for approximately half of the biomass materials produced on the earth, also has excellent physical characteristics, such as strength, elastic modulus, dimensional stability, heat resistance, and crystallinity, in addition to having biodegradability, applications to functional materials are expected. Particularly, as in PTLs 2 and 3, it is known that cellulose nanofibers obtained by performing dispersion treatment of cellulose obtained from an oxidation reaction, using a 2,2,6,6-tetramethyl-l-piperidine N-oxyradical (hereinafter referred to as "TEMPO") catalyst, form a film that has excellent transparency and excellent gas barrier properties under drying conditions, in addition to the properties of the cellulosic material. Additionally, a gas barrier film in which one moisture barrier is further provided in addition to a cellulose nanofiber layer is reporter in PTL 4. PTL 5 disloses a similar laminate and packaging material

### Citation List

### Patent Literature

[PTL 1] Japanese Unexamined Patent Application, First Publication No. H7-164591
[PTL 2] Japanese Unexamined Patent Application, First Publication No. 2008-308802
[PTL 3] Japanese Unexamined Patent Application, First Publication No. 2008-1728
[PTL4] Japanese Unexamined Patent Application, First Publication No. 2009-57552
[PTL 5] Japanese Unexamined Patent Application First Publication No. 2009-263850

### Summary of Invention

### Technical Problem

However, the film made of cellulose nanofibers has a problem in that performance, such as gas barrier properties, deteriorates due to moisture absorption or swelling of cellulose under high humidity conditions. Since the gas barrier film in which one moisture barrier is further provided in addition to a cellulose nanofiber layer, which is described in PTL 4, also has a great influence on the moisture absorption or swelling of the cellulose nanofibers, a method of making the cellulose nanofiber film itself wetproof is required in order to solve the above problem.

On the other hand, although the cellulose fibers form a film that has excellent strength or flexibility by virtue of a dense entanglement structure between the fibers, a structure with many gaps is obtained. Therefore, deterioration factors, such as contaminants in water vapor or in the atmosphere enter or permeate easily, and cause deterioration of a base material that becomes a film or a foundation. Particularly, since the entry of water vapor becomes a factor that causes performance deterioration for hygroscopic high cellulose, this is not desirable.

Thus, an object of the invention is to make a film made of cellulose fibers waterproof to thereby provide a gas barrier laminate that can maintain an excellent gas barrier performance of the cellulose film even under high humidity and that can suppress entry or permeation of water vapor or dirt, which cause deterioration, into the film.

### Solution to Problem

As means for solving the above problems, the gas barrier laminate described in claims 1-4 and the packaging material described in claims 5, 6 are provided.

### Advantageous Effects of Invention

The invention can provide a gas barrier laminate with little environmental load by using the cellulosic material. Additionally, a gas barrier laminate that can show excellent gas barrier performance even in a high humidity environment and that can suppress entry or permeation of water vapor or dirt, which cause deterioration, can be obtained by using a composite film made of cellulose fibers and the water-soluble polymer.

### Description of Embodiments

The invention will be described below in detail. A gas barrier laminate of the invention is constituted by a base material, and a gas barrier layer containing at least cellulose fibers and a water-soluble polymer on at least one side of the base material.

As the cellulose fibers contained in the gas barrier layer of the invention, cellulose fibers with a fiber width of 3 nm to 50 nm and a length of several micrometers can be used. If the fiber width falls within the above range, a film with high transparency and high strength can be obtained. Particularly, since a range of 3 nm to 10 nm is preferable as the fiber width, and the entanglement between the fibers is denser, a film that is excellent in performance, such as gas barrier properties or strength, can be obtained.

Here, in fiber width measurement of the cellulose fibers, an article obtained by dropping and drying one droplet of a 0.001 wt.% cellulose fiber aqueous dispersion on a mica substrate can be used as a sample. As a measuring method, for example, measurement is performed by observing the shape of a surface using an AFM (a nanoscope, made by Nihon Veeco K.K.) and regarding the difference in height between the mica base material and the fibers as the fiber width.

Additionally, a determination as to whether or not the entanglement of the fibers is dense can be made, for example, by observing a surface using an SEM (S-4800, made by Hitachi High Technologies Corporation) or measuring the specific gravity of a cast film. As for the measurement of the specific gravity of a cast film, measurement can be made using a digital specific gravity meter (AND-DMA-220, made by Ando Keiki Co., Ltd.), and the cast film that is a sample may be prepared by pouring a predetermined amount of cellulose fiber aqueous dispersion into a rectangular case made of polystyrene and heating and drying the dispersion at 50°C for 24 hours.

As for the film containing cellulose fibers, a film is obtained having a smaller fiber width and a dense entanglement of the fibers as the number or size of gaps produced between the fibers is smaller according to the surface observation and as the specific gravity is higher according to the measurement of the specific gravity. Accordingly, by further eliminating the gaps between the fibers, entry or permeation of water vapor or dirt, which cause deterioration, into the film, can be prevented, and deterioration of gas barrier properties under high humidity can be suppressed.

Thus, in the present invention, as a material that can fill the gaps that are present between the cellulose fibers in the film, it is preferable that a water-soluble polymer having excellent affinity with cellulose be contained in the gas barrier layer. A composite film prepared by mixing the cellulose fibers and the water-soluble polymer is a film that suppresses entry or permeation of water vapor or dirt, which cause deterioration, and as a result, shows excellent gas barrier properties even in a high humidity environment.

As the water-soluble polymer, one or more kinds of polymers selected from synthetic polymers, such as polyamine, or derivatives thereof, and from water-soluble polysaccharides, such as polyuronic acid, chitin, chitosan, alginic acid, pectin, gelatin, guar gum, carragheenan, or derivatives thereof, can be used.

Additionally, it is particularly preferable to use the polyuronic acid from the water-soluble polysaccharides. Polyuronic acid includes naturally-derived polyuronic. acids, such as alginic acid, pectin, and hyaluronic acid, or cello-uronic acid, amino-uronic acid, chito-uronic acid, obtained by performing oxidization of treatment on natural polysaccharides, such as cellulose, starch, and chitin, and these are obtained from natural biomass resources and are extremely preferable as materials with little environmental load. Particularly, since the cello-uronic acid, the amino uronic acid, and the chito-uronic acid have chemical structures similar to the cellulose fibers, these have excellent compatibility, and have extremely high adhesion to the surfaces of the cellulose fiber.

Among them, since a composite film that has the highest adhesion to the surfaces of the cellulose fibers is dense, and has a high specific gravity and high strength can be obtained from the cello-uronic acid obtained by oxidization of the same cellulosic raw material as the cellulose fibers, the cello-uronic acid can be most favorably used.

Additionally, a film that has excellent compatibility with cellulose and has gas barrier properties and strength can be formed from amylo-uronic acid obtained by oxidizing starch. Hence, since a composite film of the cellulose fibers and amylo-uronic acid becomes a film having high gas barrier properties, this film is preferable.

Additionally, although pectin, which is a kind of the polyuronic acid, has weak compatibility with the cellulose fibers compared to the cello-uronic acid or the amylo-uronic acid, the pectin has features such that the film-forming property is high and the strength of a film obtained is high. Hence, since a composite film of the cellulose fibers and the pectin becomes a film having high strength in addition to gas barrier properties, this film is preferable.

The cello-uronic acid can be produced as follows, for example. Alkali-treated cellulose is oxidized using at least one kind of an oxidizer selected from hypohalous acid, halous acid, perhalogen acid, and salts thereof, under the coexistence of TEMPO and alkali metal bromide or alkali metal iodide, and a carboxyl group is introduced into the 6-position of glucose residue.

The weight ratio ((A)/(B)) of the cellulose fibers (A) of the invention and the water-soluble polymer (B) preferably falls within a range of 5/95 to 95/5. In a case where the weight of the water-soluble polymer increases compared to the weight of the cellulose fibers out of this range, the entanglement of the cellulose fibers disappears. Therefore, this is not preferable because the strength or flexibility of the film deteriorates. Additionally, in a case where the weight of the cellulose fibers increases compared to the weight of the water-soluble polymer out of this range, the gaps between the cellulose fibers cannot be sufficiently filled with the water-soluble polymer. Therefore, performance, such as gas barrier properties, cannot be sufficiently exhibited. In addition, in a case where the water-soluble polymer contained in the gas barrier layer is of two or more kinds, the total weight of all water-soluble polymers is adopted as the weight of the water-soluble polymer (B).

Additionally, in a case where a polyuronic acid is used as the water-soluble polymer, the weight ratio ((A)/(B)) of the cellulose fibers (A) and the polyuronic acid (B) preferably falls within a range of 20/80 to 95/5. If the weight ratio falls within this range, since the gaps between the cellulose fibers can be sufficiently filled and surface smoothness becomes high, gas barrier properties become high.

The cellulose fibers of the invention can be obtained as a cellulose fiber dispersed body by the following method. First, the microfibril surfaces of cellulose are subjected to oxidization treatment by making an N-oxyl compound that is an oxidation catalyst, and an oxidizer acts on a natural cellulose raw material in water or water/alcohol. Next, after impurities are removed, a dispersed body of the cellulose fibers can be obtained by performing dispersion treatment in water or a water/alcohol mixed solution.

As the natural cellulose as a raw material, various wood pulps obtained from softwood, hardwood, nonwood pulps obtained from kenaf, bagasse, straw, bamboo, cotton, seaweed, cellulose obtained from sea squirts, cellulose produced by microbes, can be used. Additionally, as for crystal structure, a cellulose I type is preferable.

As the oxidation catalyst, a solution or suspension containing an N-oxyl compound, a co-oxidizer, and an oxidizer is used. As the N-oxyl compound, TEMPO derivatives, such as TEMPO, 4-acetamide-TEMPO, 4-carboxy-TEMPO, 4-phosphonooxy-TEMPO, can be used. As the co-oxidizer, bromide or iodide is preferable, for example, alkali metal bromide or alkali metal iodide can be used. Particularly, sodium bromide with excellent reactivity is preferable. Although halogen, hypohalous acid, or salts thereof, halous acid or salts thereof, hydrogen peroxide, can be used as the oxidizer, sodium hypochlorite is preferable.

It is preferable that the pH of a reaction solution including a cellulose raw material and an oxidation catalyst be within a range of pH 9 to pH 12 from a viewpoint that an oxidation reaction is made to proceed efficiently.

Although the temperature conditions of the oxidation reaction may be within a range of 5°C to 70°C, 50°C or higher is preferable, considering that a side reaction is easily caused if the reaction temperature becomes high.

In the cellulose subjected to the oxidation treatment, carboxyl groups are introduced into microfibril surfaces, and an osmotic pressure effect due to the electrostatic repulsion between the carboxyl groups makes microfibrils in the order of nanometers independent (dispersed). Particularly, in a case where water is used as a dispersion medium, the most stable dispersion state is given. However, ethers and ketones including alcohols (ethanol, methanol, isopropanol, tert-butanol) may also be included according to drying conditions or various purposes, such as improvement and control of liquid physical properties.

Additionally, as the dispersion method, for example, any one of a mixer, a high-speed homomixer, a high-pressure homogenizer, an ultrasonic homogenizer, grinder grinding, freeze pulverization, a media mill, a ball mill, or combinations thereof can be used.

In addition to the cellulose fibers and the water-soluble polymer, a siloxane compound may be contained in the gas barrier layer of the invention. The siloxane compound is a compound in which a hydrolyzate of a silane-coupling agent is subjected to siloxane bonding by condensation polymerization. A cross-linked structure obtained by the siloxane bonding has a significantly high effect of suppressing swelling of the cellulose, in addition to water resistance or adhesion to the base material. Particularly, since the siloxane compound obtained from tetraethyl orthosilicate has an advanced cross-linked structure formed only from the siloxane bond, the siloxane compound is a compound that most suppresses entry of water vapor into the film. In addition, siloxane compounds obtained from various silane-coupling agents, such as 3-glycidoxypropyltrimethoxysilane, allyltriethoxysilane, 3-aminopropyltriethoxysilane, and 3-(acryloyloxy)propyltrimethoxysilane can be used. Additionally, these may be used by mixing two or more kinds thereof. It is preferable that the siloxane compound be contained within a range of 0 wt.% to 70 wt.% with respect to the overall gas barrier layer. The siloxane compound is contained within a range of 30 wt. % to 60 wt.% whereby adhesion to the base material or swelling of the cellulose can be supressed and higher barrier properties can be exhibited in addition to the above effects.

A layered mineral may be further contained in the gas barrier layer of the invention. As the layered mineral, kaolinite, dickite, nakhite, halloysite, antigorite, chrysotile, pyrophyllite, montmorillonite, beidellite, hectorite, saponite, stevensite, tetrasilicic mica, sodium taeniolite, white mica, margarite, talc, vermiculite, brown mica, xanthophyllite, chlorite, can be used. As commercial products, Sumecton SA (made by Kunimine Industries Co., Ltd.) that has a saponite structure belonging to smectite-based clay minerals, Kunipia-F (made by Kunimine Industries.Co., Ltd.) that is sodium type montmorillonite, and Bengel (made by Hojun Co., Ltd.) that is refined natural bentonite can be used. Additionally, an organic compound is made to form a composite with the layered mineral. For example, a complex in which quaternary class ammonium ions having a long chain alkyl group are intercalated between layers by ion exchange can be used. As commercial products, Benton 27, Benton 38 (made by Elementis Spcialties Inc.), can be used. It is preferable that the layered mineral be contained within a range of 0 wt.% to 70 wt.% with respect to the overall gas barrier layer. If the layered mineral is contained within this range, this is preferable because the layered mineral can suppress swelling of the cellulose, and swelling of the water-soluble polymer can also be suppressed by the moisture-holding effect. Moreover, if the layered mineral is contained within a range of 10 wt.% to 50 wt.%, the strength of the film can be kept from decreasing by putting in the layered mineral. If the layered mineral is contained within a range of 30 wt.% to 50 wt.%, higher barrier properties can be exhibited in addition to the above effects.

Additionally, an additive may be further added to the gas barrier layer in order to impart functionality. For example, a leveling agent, an antifoaming agent, synthetic polymer, inorganic particles, organic particles, lubricant, an ultraviolet absorber, a dyer, a pigment, a stabilizer, can be used. These can be added to a coating liquid within a range not impairing gas barrier properties, and can also improve film characteristics depending on the intended use.

Next, a method for producing the gas barrier laminate will be described. The gas barrier laminate of the invention can be obtained by coating and drying a coating agent having an aqueous solution containing at least the cellulose fibers and the water-soluble polymer as a main agent on at least one side of the base material.

As the base material of the invention, plastic materials including various polymer composites can be used. For example, plastic materials including a polyolefin group (polyethylene, polypropylene), a polyester group (polyethylene terephthalate, polyethylene naphthalate), a cellulose group (triacetyl cellulose, diacetyl cellulose, cellophane), a polyamide group (6-nylon, 6,6-nylon, )an acrylic group (polymethylmethacrylate), polystyrene, polyvinyl chloride, polyimide, polyvinyl alcohol, polycarbonate, ethylene vinyl alcohol, are used. Additionally, organic polymeric materials that have at least one or more sorts of components among the above-mentioned plastic materials or have these components as copolymerization components or have chemically modified products thereof as components are also possible.

Moreover, in recent years, it is effective to use materials that reduce at least the environmental load. Even in the base material of the invention, for example, base materials containing bio-plastics that are chemically synthesized from plants, such as polylactate and bio-polyolefin, or plastics that produce microbes, such as hydroxyalkanoate, or pulps paper obtained through processes, such as pulping and paper making of wood, plants, can be used. Moreover, base materials containing cellophane, acetylated cellulose, cellulose derivatives, and cellulose nanofibers, which contain cellulosic materials, are also possible.

In the base material of the invention, the surface of the base material may be subjected to surface treatment, such as corona treatment, plasma treatment, frame treatment, ozonization, or anchor coat treatment in order to improve the adhesion between various layers and the base material.

Additionally, as the base material of the invention, base materials subjected to ceramic vapor deposition may be used. For example, base materials obtained by vapor-depositing aluminum oxide, magnesium oxide, tin oxide, silicon oxide, can be used. Film-forming methods include a vacuum vapor deposition method, a sputtering method, a plasma vapor phase epitaxial method.

Additionally, the shape of the base material is not particularly limited and various forming bodies having a film shape, a sheet shape, a bottle shape, a tube shape, can be appropriately selected depending on the intended use. Particularly, if utilizing the transparency or flexibility of the cellulose fibers contained in the gas barrier layer is taken into consideration, it is desirable that the base material have a film shape, and a transparent plastic film can be favorably used. The film-like base material may be either stretched or not stretched and may have mechanical strength or dimensional stability. For example, a polyethylene terephthalate film or a polyamide film that are arbitrarily stretched in axial directions can be favorably used. Moreover, it is also possible to use base materials to which functions are added using various well-known additives or stabilizers, for example, a plasticizer, lubricant, an antioxidant, an ultraviolet-ray inhibitor.

Selection of the base materials can be appropriately performed depending on the intended use. For example, in a case where the gas barrier laminate is used as a packaging material, a polyolefin-based, polyester-based, or polyamide-based film is preferable from the viewpoint of price, damp-proofing, filling fitness, texture, and disposability. However, paper or a polylactate film is more preferable as an eco-friendly material.

As methods for forming the gas barrier layer, well-known coating methods can be used. For example, a roll coater, a reverse roll coater, a photogravure coater, a micro-photogravure coater, a knife coater, a bar coater, a wire bar coater, a die coater, a dip coater, can be used. Coating is performed on at least one side of the base material using the above coating methods. As drying methods natural drying, air-blowing drying, hot-air drying, UV drying, heat roll drying, infrared-ray irradiation, can be used.

Additionally, in order to improve the strength or adhesion of the film, it is also possible to further perform UV irradiation or EB irradiation treatment after formation of the gas barrier layer.

Moreover, a gas barrier laminate after an intermediate film layer, a thermoplastic heat-sealable resin layer (heat-sealing layer), a printing layer, are laminated, if necessary, on the gas barrier layer, can be used as a packaging material. Additionally, an adhesive layer (adhesive layer for a laminate) for laminating respective layers using a dry laminating method or a wet laminating method, or a primer layer, an anchor coat layer, in a case where a heat-sealing layer is laminated using a melting extrusion method may be laminated.

Configuration examples (a) to (c) in which the gas barrier laminate of the invention is used as a packaging material will be shown. However, the gas barrier laminate of the invention is not limited to this.
(a) Base material/Gas barrier layer/Adhesive layer for laminate/Heat-sealing layer
(b) Base material /Gas barrier layer/Printing layer/Adhesive layer for laminate/Heat-sealing layer
(c) Base material/Gas barrier layer/Adhesive layer for laminate/Intermediate film layer/Adhesive layer for laminate/Heat-sealing layer

Since the intermediate film layer is provided to enhance the breakage strength during boiling and retort sterilization, generally, the intermediate film layer is often selected from a biaxial-stretched nylon film, a biaxial-stretched polyethylene terephthalate film, and a biaxial-stretched polypropylene film from the viewpoints of machine strength and heat stability. Although the thickness is determined according to the material, required quality, generally, the thickness is within a range of 10 µm to 30 µm. Lamination can be made by the dry laminating method performing bonding using adhesives, such as two-pack type curable urethane resin, as a forming method. Additionally, in a case where a base material having excellent gas permeability, such as paper, lamination can be made by the wet lamination method using a waterborne adhesive like a starch-based water-soluble adhesive or vinyl acetate emulsion.

Additionally, the heat-sealing layer is provided as a seal layer, when forming a bag-shaped packing body. For example, films made of one kind of resin, such as polyethylene, polypropylene, an ethylene vinyl acetate copolymer, an ethylene-methacrylic acid copolymer, an ethylene-methacrylic acid ester copolymer, an ethylene-acrylic acid copolymer, an ethylene-acrylic acid ester copolymer, or metal cross-linked products thereof; are used. Although the thickness of the heat-sealing layer is determined according to the purpose, generally, the thickness is within a range of 15 µm to 200 µm. Although the dry laminating method for bonding a film, which forms the heat-sealing layer, using adhesives, such as two-pack curable urethane resin, is generally used as a forming method, all can be laminated by well-known methods.

Additionally, as adhesives used as the adhesive layer for a laminate, well-known adhesives, such as an acryl-based adhesive, a polyester-based adhesive, an ethylene vinyl acetate-based adhesive, a urethane-based adhesive, a vinyl chloride vinyl acetate-based adhesive, and a chlorinated polypropylene-based adhesive, can be used according to the materials of respective layers to be laminated. As coating methods of adhesives for forming the adhesive layer for a laminate, well-known coating methods can be used. For example, a roll coater, a reverse roll coater, a photogravure coater, a micro-photogravure coater, a knife coater, a bar coater, a wire bar coater, a die coater, a dip coater, can be used. As the coating amount of the adhesives, 1 g/m² to 10 g/m² is preferable.

Additionally, the printing layer is formed in order to be practically used as a packing bag, and is a layer formed by ink in which various pigments, such as an extender pigment, additives, such as a plasticizer, a drying agent, or a stabilizer, are added to an ink binder resin that has been used in the related art, such as a urethane-based resin, an acryl-based resin, a cellulose nitrate-based resin, a rubber-based resin, or a vinyl chloride-based resin. Character, patterns, are formed on the printing layer.

### [Examples]

Although the invention will be described below in more detail by means of examples, the invention is not limited by these examples.

Respective materials of the cellulose fibers ((a)), the water-soluble polymer ((bl) to (b4)), the layered mineral ((c)), and the siloxane compound ((d)), which are shown below, were mixed in compounding ratios shown in Table 1, and coating liquids of formulas 1 to 13 were prepared. In addition, the weight of ethyl orthosilicate hydrolyzate of Formula 8 is a value in SiO₂ conversion.

(a) Cellulose fibers: a cellulose fiber dispersed body was prepared by the following "method for producing cellulose fibers".
(b1) Cello-uronic acid: was prepared by the following "method for producing cello-uronic acid".
(b3) Polyvinyl alcohol: commercial product (PVA-124, made by Kuraray Co., Ltd.)
(b2) Amylo-uronic acid: was prepared by the following "method for producing amylo-uronic acid".
(b4) Pectin: commercial product (made by Wako Pure Chemical Industries, Ltd.)
(c) Montmorillonite: commercial product (Kunipia-F, Kunimine Industries Co., Ltd.)
(d) Ethyl orthosilicate: one obtained by hydrolyzing a commercial product (made by Wako Pure Chemical Industries, Ltd.) in water and ethanol under the condition of acidity was obtained.

### [Method for producing cellulose fibers]

10 g of bleached kraft pulp were left in 500 ml of water one night, and the pulp was made to swell. The temperature of this resultant was adjusted to 20°C, and 0.1 g of TEMPO and 1 g of sodium bromide were added to obtain a pulp suspension. Moreover, sodium hypochlorite with 10 mmol/g per cellulose weight was added while performing agitation. In this case, about 1 N of a sodium hydroxide aqueous solution was added, and the pH of the pulp suspension was held at about 10.5. Thereafter, a reaction was performed for 240 minutes and was sufficiently washed with water to obtain a pulp. The obtained pulp was adjusted to a solid content concentration of 1% with ion-exchanged water and agitated for about 60 minutes using a high-speed rotation mixer, to obtain a dispersion liquid of transparent cellulose fibers.

### [Method for producing cello-uronic acid]

5 g of Benrize (made by Asahi Chemical Co., Ltd.) were dispersed in advance in water. Preparation was made so that the solid content concentration of Benrize became about 1.3 wt.% by adding an aqueous solution, in which 0.96 g of TEMPO and 1.27 g of sodium bromide was dissolved, to this dispersion liquid. Next, an oxidation reaction was started by adding 57 g of an 11 % sodium hypochlorite aqueous solution. The reaction was performed under the conditions that the temperature within a system was 5°C and pH was 10.5. (Since pH fell if the reaction progressed, an NaOH aqueous solution was added dropwise and pH was kept constant) The cello-uronic acid was obtained by stopping the reaction after 10 hours, sufficiently performing washing with a water/acetone mixed solution, and then performing drying under reduced pressure.

### [Method for producing amylo-uronic acid]

5 g of water-soluble starch (made by Acros Organics) were dissolved in advance in water. Preparation was made so that the solid content concentration of starch became about 1.3 wt.% by adding an aqueous solution, in which 0.048 g of TEMPO and 0.635 g.of sodium bromide were dissolved, to this aqueous solution. Next, an oxidation reaction was started by adding 44 g of a 11% sodium hypochlorite aqueous solution. The reaction was performed under the conditions that the temperature within a system was 5°C and pH was 10.5. (Since pH fell if the reaction progressed, an NaOH aqueous solution was added dropwise and pH was kept constant) The amylo-uronic acid was obtained by stopping the reaction after 10 hours, sufficiently performing washing with a water/acetone mixed solution, and then performing drying under reduced pressure.

**[Table 1]**

| Material | Compounding ratio (wt.%) | | | | | | | | | | | | |
|---|---|---|---|---|---|---|---|---|---|---|---|---|---|
| | Prescription 1 | Prescription 2 | Prescription 3 | Prescription 4 | Prescription 5 | Prescription 6 | Prescription 7 | Prescription 8 | Prescription 9 | Prescription 10 | Prescription 11 | Prescription 12 | Prescription 13 |
| Cellulose fiber | 0.5 | 0.8 | 0.2 | 0.9 | 0.5 | 0.5 | 0.5 | 0.35 | 0.4 | 0.1 | 1 | - | - |
| Cello-uronic acid | 0.5 | 0.2 | 0.8 | - | - | - | 0.25 | - | - | 0.9 | - | 1 | - |
| Polyvinyl alcohol | - | - | - | 0.1 | - | - | - | - | 0.6 | - | - | - | 1 |
| Amylo-uronic acid | - | - | - | - | 0.5 | - | - | - | - | - | - | - | - |
| Pectin | - | - | - | - | - | 0.5 | - | 0.3 | - | - | - | - | - |
| Montmorillonite | - | - | - | - | - | - | 0.25 | - | - | - | - | - | - |
| Ethyl orthosilicate | - | - | - | - | - | - | - | 0.35 | - | - | - | - | - |
| Water | 99 | 99 | 99 | 99 | 99 | 99 | 99 | 69 | 99 | 99 | 99 | 99 | 69 |
| Methanol | - | - | - | - | - | - | - | 30 | - | - | - | - | 30 |

### <Examples 1 to 10>

### [Preparation of gas barrier film in Examples 1 to 10]

Gas barrier films were prepared such that coating liquids prepared in compounding ratios shown in Formulas 1 to 10 of Table 1 were coated and then dried on a polyethylene terephthalate film (Luminor P60, Toray Industries, Inc.) with a thickness of 12 µm by the bar coating method so that the film thickness of 0.2 µm was obtained, and gas barrier layers were formed.

### [Preparation of gas barrier film for packing material in Examples 1 to 10]

Moreover, in order to use the prepared gas barrier films as packaging materials, gas barrier films for a packaging material were prepared by bonding a heat-sealing layer to a gas barrier layer side via an adhesive layer for a laminate by the dry lamination method, and performing curing at 50°C for four days. A straight-chain low-density polyethylene film (TUX-FCS, made by Toh Cello Co., Ltd.) with the thickness of 50 µm) was used as the heat-sealing layer, and an adhesive for a two-pack curable polyurethane-based laminate (A515/A50, made by Mitsui Chemicals Polyurethanes, Inc.) was used as the adhesive that forms the adhesive layer for a laminate. The adhesive was coated on the gas barrier layer by the gravure coating method so that the.coating amount after drying became 4.0 g/m².

### [Comparative Examples 1 to 3]

### [Preparation of gas barrier film in Comparative Examples 1 to 3]

Gas barrier films were prepared such that coating liquids prepared at the compounding ratios shown in Formulas 11 to 13 of Table 1 were coated and then dried on a polyethylene terephthalate film (Lumirror P60, Toray Industries, Inc.) with a thickness of 12 µm by the bar coating method so that a film thickness of 0.2 µm was obtained, and gas barrier layers were formed.

### [Preparation of gas barrier film for packaging material in Comparative Examples 1 to 3]

Moreover, Gas barrier films for a packaging material were prepared by the same operation as Examples 1 to 10.

The performance of the obtained gas barrier films was evaluated according to the following method.

### [Oxygen transmittance (equal pressure method) (cm³/m²-day-Pa)]

Measurement was performed under an atmosphere of 30°C, 40 %RH, and 70 %RH using the oxygen transmittance measuring device MOCON (OX=TRAN2/21, made by Modern Controls Inc). The results obtained by measuring the oxygen transmittance of the gas barrier film are shown in Table 2.

### [Flexibility]

Flexibility was evaluated by measuring the oxygen transmittance under an atmosphere of 30°C, 40 % RH, and 70 %RH after respective gas barrier films were flexed 10 times and 100 times using the Gelvo Flex Tester (made by Tester Sangyo Co., Ltd.). The results obtained by measuring the oxygen transmittance of the gas barrier films for a packaging material are shown in Table 3.

**[Table 2]**

| Evaluation | Measuring condition | Example 1 | Example 2 | Example 3 | Example 4 | Example 5 | Example 6 | Example 7 | Example 8 | Example 9 | Example 10 | Comparative Example 1 | Comparative Example 2 | Comparative Example 3 |
|---|---|---|---|---|---|---|---|---|---|---|---|---|---|---|
| | | Prescription 1 | Prescription 2 | Prescription 3 | Prescription 4 | Prescription 5 | Prescription 6 | Prescription 7 | Prescription 8 | Prescription 9 | Prescription 10 | Prescription 11 | Prescription 12 | Prescription 13 |
| Oxygen permeability (cm3/m2 day Pa) | 30°C 40%RH | 7 | 13 | 5 | 3 | 4 | 4 | 1.4 | 0.3 | 6 | 7 | 22 | 21 | 19 |
| | 30°C 70%RH | 61 | 85 | 59 | 35 | 64 | 73 | 16 | 4 | 80 | 65 | 120 | 113 | 109 |

**[Table 3]**

| Evaluation | Measuring condition | Example 1 | Example 2 | Example 3 | Reference Example 4 | Example 5 | Example 6 | Example 7 | Example 8 | Reference Example 9 | Example 10 | Comparative Example 1 | Comparative Example 2 | Comparative Example 3 |
|---|---|---|---|---|---|---|---|---|---|---|---|---|---|---|
| | | Prescription 1 | Prescription 2 | Prescription 3 | Prescription 4 | Prescription 5 | Prescription 6 | Prescription 7 | Prescription 8 | Prescription 9 | Prescription 10 | Prescription 11 | Prescription12 | Prescription 13 |
| Oxygen permeability (cm3/m2 day Pa) 30°C 70%RH | 0 Time | 18 | 26 | 16 | 8 | 10 | 12 | 4 | 1 | 15 | 20 | 39 | 34 | 33 |
| | After 10 times | 18 | 27 | 16 | 8 | 10 | 14 | 4 | 2 | 15 | 20 | 40 | 45 | 35 |
| | After 100 times | 21 | 32 | 19 | 8 | 14 | 18 | 7 | 4 | 18 | 25 | 58 | 61 | 36 |

As a result of the measurement, the gas barrier films of Examples 1 to 10 showed high gas barrier properties compared to Comparative Examples 1 to 3. Moreover, deterioration of the gas barrier properties under the condition of high humidity (70 %RH) could be suppressed. Additionally, the gas barrier films for a packaging material of Examples 1 to 10 maintained high oxygen barrier properties, even after being flexed 100 times in the Gelvo Flex Tester.

### Industrial Applicability

The gas barrier laminate of the invention can be used for films or sheets, or moldings, such as bottles, that cut off gas, such as oxygen or water vapor, which permeates a packaging material, in order to protect the contents in the field of packaging materials, including food or drugs.

## Claims

1. A gas barrier laminate consisting of:
a base material ; and
a gas barrier layer provided on at least one side of the base material,
wherein
the gas barrier layer contains at least cellulose fibers and one or more kinds of water-soluble polymer selected from the group consisting of polyamine, polyuronic acid, chitin, chitosan, alginic acid, pectin, gelatin, guar gum and carragheenan, or derivatives thereof,
the fiber width of the cellulose fibers falls within a range of 3 nm to 50 nm,
the weight ratio ((A)/(B)) of the cellulose fibers (A) and the water-soluble polymer (B) falls within a range of 5/95 to 95/5, and
the gas barrier layer further contains 30 wt.% to 60 wt.% of a siloxane compound.

2. The gas barrier laminate according to Claim 1,
wherein at least one kind of the water-soluble polymer is polyuronic acid.

3. The gas barrier laminate according to Claim 2,
wherein the weight ratio ((A)/(B)) of the cellulose fibers (A) and the polyuronic acid (B) falls within a range from greater;than 20/80 to equal or less than 95/5.

4. The gas barrier laminate according to Claim 3,
wherein the gas barrier layer further contains a layered mineral.

5. A packaging material formed by laminating a heat-sealable thermoplastic resin layer via an adhesive layer on at least one side of the gas barrier laminate according to any one of Claims 3 or 4.

6. The gas barrier laminate according to Claim 1,
wherein the base material is formed from a plastic material.

## Patentansprüche

1. Gasbarrierelaminat, bestehend aus:
einem Basismaterial; und
einer Gasbarriereschicht, die auf mindestens einer Seite des Basismaterials bereitgestellt ist,
wobei
die Gasbarriereschicht mindestens Cellulosefasern und eine oder mehrere Arten wasserlösliches Polymer enthält, ausgewählt aus der Gruppe bestehend aus Polyamin, Polyuronsäure, Chitin, Chitosan, Alginsäure, Pectin, Gelatine, Guargummi und Carrageen oder Derivaten davon,
die Faserbreite der Cellulosefasern innerhalb eines Bereichs von 3 nm bis 50 nm fällt,
das Gewichtsverhältnis ((A)/(B)) der Cellulosefasern (A) und des wasserlöslichen Polymers (B) innerhalb eines Bereichs von 5/95 bis 95/5 fällt und
die Gasbarriereschicht ferner 30 Gew.-% bis 60 Gew.-% einer Siloxanverbindung enthält.

2. Gasbarrierelaminat nach Anspruch 1,
wobei mindestens eine Art des wasserlöslichen Polymers Polyuronsäure ist.

3. Gasbarrierelaminat nach Anspruch 2,
wobei das Gewichtsverhältnis ((A)/(B)) der Cellulosefasern (A) und der Polyuronsäure (B) innerhalb eines Bereichs von 20/80 bis gleich oder weniger als 95/5 fällt.

4. Gasbarrierelaminat nach Anspruch 3,
wobei die Gasbarriereschicht ferner ein schichtförmiges Mineral enthält.

5. Verpackungsmaterial, das durch Laminieren einer wärmeversiegelbaren thermoplastischen Harzschicht durch eine Klebstoffschicht auf mindestens eine Seite des Gasbarrierelaminats nach irgendeinem der Ansprüche 3 oder 4 gebildet wird.

6. Gasbarrierelaminat nach Anspruch 1,
wobei das Basismaterial aus einem Kunststoffmaterial gebildet ist.

## Revendications

1. Stratifié formant barrière aux gaz constitué de:
un matériau de base; et
une couche formant barrière aux gaz prévue sur au moins un côté du matériau de base,
où
la couche formant barrière aux gaz contient au moins des fibres de cellulose et un ou plusieurs types de polymère soluble dans l'eau sélectionné dans le groupe constitué de la polyamine, du poly(acide uronique), de la chitine, du chitosane, de l'acide alginique, de la pectine, de la gélatine, de la gomme de guar et de la gomme carraghénane, ou leurs dérivés,
la largeur de fibre des fibres de cellulose tombe à l'intérieur d'une plage de 3 nm à 50 nm,
le rapport en poids ((A)/(B)) des fibres de cellulose (A) et du polymère soluble dans l'eau (B) tombe à l'intérieur d'une plage de 5/95 à 95/5, et
la couche formant barrière aux gaz contient en outre de 30 % en pds à 60 % en pds d'un composé siloxane.

2. Stratifié formant barrière aux gaz selon la revendication 1,
dans lequel au moins un type de polymère soluble dans l'eau est le poly(acide uronique).

3. Stratifié formant barrière aux gaz selon la revendication 2,
dans lequel le rapport en poids ((A)/(B)) des fibres de cellulose (A) et du poly(acide uronique) (B) tombe à l'intérieur d'une plage supérieure à 20/80 jusqu'à une valeur inférieure ou égale à 95/5.

4. Stratifié formant barrière aux gaz selon la revendication 3,
dans lequel la couche formant barrière aux gaz contient en outre un minéral stratifié.

5. Matériau d'emballage formé par stratification d'une couche de résine thermoplastique thermiquement scellable grâce à une couche adhésive sur au moins un côté du stratifié formant barrière aux gaz selon l'une quelconque des revendications 3 ou 4.

6. Stratifié formant barrière aux gaz selon la revendication 1,
dans lequel le matériau est formé d'une matière plastique.
